(19) Europäisches Patentamt
European Patent Office
Office européen des brevets

(11) Veröffentlichungsnummer: **0 073 406**
**B1**

# (12) EUROPÄISCHE PATENTSCHRIFT

(45) Veröffentlichungstag der Patentschrift: **20.03.85**

(51) Int. Cl.⁴: **C 09 B 62/085**, C 09 B 62/51, D 06 P 3/66, D 06 P 3/10

(21) Anmeldenummer: **82107472.1**

(22) Anmeldetag: **17.08.82**

## (54) Wasserlösliche Monoazo-pyrazolon-Verbindungen, Verfahren zu ihrer Herstellung und ihre Verwendung als Farbstoffe.

(30) Priorität: **20.08.81 DE 3132917**

(43) Veröffentlichungstag der Anmeldung: **09.03.83 Patentblatt 83/10**

(45) Bekanntmachung des Hinweises auf die Patenterteilung: **20.03.85 Patentblatt 85/12**

(84) Benannte Vertragsstaaten: **CH DE FR GB IT LI**

(56) Entgegenhaltungen:
**DE - A - 1 265 698**
**US - A - 3 455 897**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Kohlhaas, Folker, Dr., Akazienring 64, D-6203 Hochheim am Main (DE)**
Erfinder: **Meininger, Fritz, Dr., Loreleistrasse 7, D-6230 Frankfurt am Main 80 (DE)**
Erfinder: **Steuernagel, Hans Helmut, Dr., An den Römergärten 1, D-6233 Kelkheim (Taunus) (DE)**

**EP 0 073 406 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Azofarbstoffe.

Mit der 2. Verbindung in Spalten 19/20 der Deutschen Auslegeschrift Nr. 1265698 ist ein Phenylazopyrazolonfarbstoff bekannt, der sowohl in der Diazokomponente, an den Benzolkern gebunden, als auch in der Kupplungskomponente, dort auch an einen Benzolkern gebunden und mit diesem über ein Chlortriazinyldiaminozwischenglied mit dem 1-Phenylrest des Pyrazolons verknüpft, jeweils eine faserreaktive β-Sulfatoäthylsulfonylgruppe enthält. Dieser bekannte Farbstoff liefert keine brauchbaren Färbungen bei der Anwendung in einem üblichen Ausziehverfahren oder Einphasenklotzverfahren.

Es wurden neue wasserlösliche Monoazoverbindungen der allgemeinen Formel 1

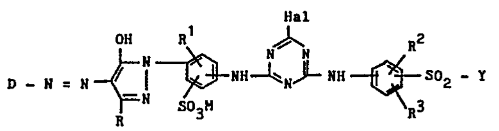 (1)

gefunden, in welcher

D ein Phenylrest oder Naphthylrest ist, die beide substituiert sind und zwingend mindestens eine wasserlöslich machende Gruppe, wie Carboxy-, Thiosulfato-, Phosphato- und insbesondere Sulfato- und Sulfogruppe, enthalten, wobei D beispielsweise durch 1, 2 oder 3 Substituenten substituiert ist, die aus der Menge von einer Sulfamoyl-, einer Carbamoyl-, einer Trifluormethyl-, einer Benzthiazol-2-yl-, einer Sulfobenzthiazol-2-yl-, einer Methylbenzthiazol-2-yl-, einer Methylsulfobenzthiazol-2-yl-, einer Styryl-, einer Nitrostyryl-, einer Sulfostyryl- und einer Nitrosulfostyrylgruppe und, bevorzugt, drei Sulfogruppen, zwei Carboxygruppen, zwei Alkylgruppen von 1 bis 4 C-Atomen, wie Äthyl- und insbesondere Methylgruppen, zwei Alkoxygruppen von 1 bis 4 C-Atomen, wie Äthoxy- und insbesondere Methoxygruppen, einem Bromatom und zwei Chloratomen und einer oder zwei Gruppen der Formel $-SO_2-Z$ mit Z der nachstehenden Bedeutung ausgewählt sein können, wobei die Gruppe $-SO_2-Z$ auch an einen der Substituenten gebunden sein kann, und

Z für die β-Hydroxyäthylgruppe steht oder bevorzugt eine Gruppe Y der nachstehend angegebenen Bedeutung ist,

M ein Wasserstoffatom oder das Äquivalent eines ein-, zwei- oder dreiwertigen Metalls der Hauptgruppen des Periodischen Systems ist, wie insbesondere eines Alkali- oder Erdalkalimetalls, wie beispielsweise des Natriums, Kaliums und Calcium,

R die Methylgruppe, eine Carboxygruppe der Formel COOM mit M der obengenannten Bedeutung oder eine Carboalkoxygruppe von 2 bis 5 C-Atomen, wie die Carbomethoxygruppe und die Carbäthoxygruppe, ist,

$R^1$ ein Wasserstoffatom oder eine Alkylgruppe von 1 bis 4 C-Atomen, wie insbesondere die Methyl- oder Äthylgruppe, ist,

$R^2$ ein Wasserstoffatom, eine Alkylgruppe von 1 bis 4 C-Atomen, wie die Äthylgruppe und insbesondere Methylgruppe, eine Alkoxygruppe von 1 bis 4 C-Atomen, wie die Äthoxy- und insbesondere Methoxygruppe, oder ein Chloratom, ist,

$R^3$ ein Wasserstoffatom, eine Alkylgruppe von 1 bis 4 C-Atomen, wie die Äthylgruppe und insbesondere Methylgruppe, oder eine Alkoxygruppe von 1 bis 4 C-Atomen, wie die Äthoxygruppe und insbesondere die Methoxygruppe, ist,

wobei die Formelglieder $R^1$, $R^2$, $R^3$ und R zueinander gleiche oder voneinander verschiedene Bedeutungen besitzen können,

Y die Vinylgruppe oder eine Äthylgruppe ist, die in β-Stellung einen als Anion alkalisch eliminierbaren Rest enthält, wie beispielsweise eine β-Thiosulfatoäthylgruppe (entsprechend der Formel $-CH_2-CH_2-S-SO_3M$ mit M der obengenannten Bedeutung), eine β-Phosphatoäthylgruppe (entsprechend der Formel $-CH_2-CH_2-OPO_3M_2$ mit M der obengenannten Bedeutung), die β-Chloräthylgruppe oder die β-Acetyloxyäthylgruppe oder vorzugsweise eine β-Sulfatoäthylgruppe (entsprechend der Formel $-CH_2-CH_2-OSO_3M$ mit M der obengenannten Bedeutung),

Hal ein Chlor- oder Fluoratom, ist.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschliesslich des Bedruckens verstanden) von hydroxy- und/oder carbonamidgruppenhaltigen Materialien, insbesondere Fasermaterialien.

Von den erfindungsgemässen Verbindungen sind diejenigen bevorzugt, in welchen der Formelrest Y für die β-Sulfatoäthylgruppe steht. Desweiteren können diejenigen erfindungsgemässen Verbindungen als bevorzugt hervorgehoben werden, in welchen D den Phenylrest oder den Naphthylrest bedeutet, die beide in ortho-Stellung zur Azogruppe durch eine Sulfogruppe substituiert sind und noch durch eine oder zwei weitere Sulfogruppen substituiert sein können. Hiervon sind insbesondere diejenigen bevorzugt, in denen D den 2-Sulfophenylrest darstellt.

Neben diesen erfindungsgemässen Azoverbindungen, die in der Diazokomponente lediglich durch Sulfo substituiert sind, können aber auch diejenigen besonders erwähnt werden, in denen D den Phenylrest bedeutet, der durch eine oder zwei Sulfogruppen und/oder eine Carboxygruppe substituiert ist und der weiterhin noch durch einen oder zwei Substituenten aus der Gruppe Chlor, Brom, Alkyl von 1 bis 4 C-Atomen und Alkoxy von 1 bis 4 C-Atomen substituiert sein kann. Von den erfindungsgemässen Azoverbindungen sind ebenso diejenigen als besonders interessant zu nennen, in denen der Formelrest D auch eine Gruppe der Formel $-SO_2-Z$ als Substituenten mit Z der obengenannten Bedeutung besitzt.

Von den erfindungsgemässen Monoazoverbindungen sind diejenigen Einzelverbindungen von

besonderem Interesse, die in den Beispielen 1 (bzw. 3), 4, 7 und 82 beschrieben sind.

Die vorliegende Erfindung betrifft weiterhin Verfahren zur Herstellung der obengenannten und definierten Azoverbindungen der allgemeinen Formel 1. Diese Verfahren sind dadurch gekennzeichnet, dass man eine Diazoniumverbindung eines Amins der allgemeinen Formel 3

$$D-NH_2 \qquad (3)$$

in welcher D die obengenannte Bedeutung hat, mit einer Pyrazolonverbindung der allgemeinen Formel 4

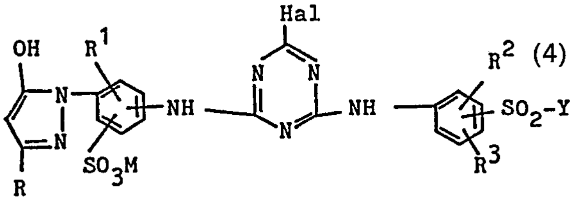
(4)

in welcher Hal, R, $R^1$, $R^2$, $R^3$, M und Y die obengenannten Bedeutungen haben, kuppelt, oder dass man eine Aminoazoverbindung der allgemeinen Formel 5

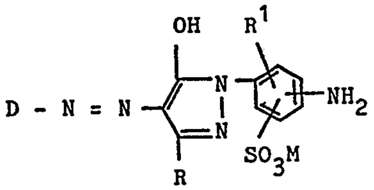
(5)

in welcher D, R, $R^1$ und M die obengenannten Bedeutungen haben, mit einer Dihalogentriazinverbindung der allgemeinen Formel 6

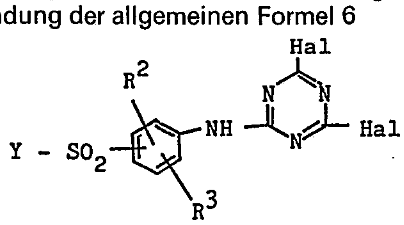
(6)

in welcher Hal, $R^2$, $R^3$ und Y die obengenannten Bedeutungen haben, umsetzt, oder dass man eine Dihalogentriazinazoverbindung der allgemeinen Formel 7

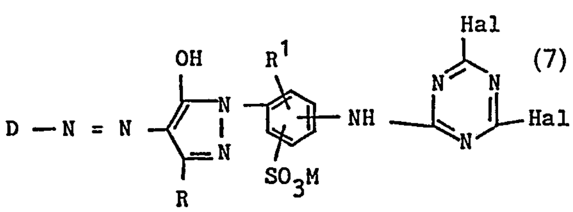
(7)

in welcher Hal, D, R, $R^1$ und M die obengenannten Bedeutungen haben, mit einer Aminoverbindung der allgemeinen Formel 8

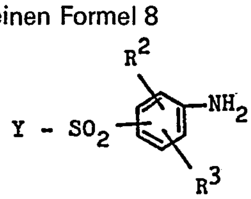
(8)

in welcher $R^2$, $R^3$ und Y die obengenannten Bedeutungen haben, umsetzt, wobei man die Reaktionskomponenten jeweils so auswählt, dass die entstehende Azoverbindung entsprechend der allgemeinen Formel 1 mindestens eine Gruppe der Formel $-SO_2-Y$ enthält.

In den Ausgangsverbindungen der Formeln 3, 4, 5, 6, 7 und 8 kann der Formelrest Y (der in D durch den Formelrest Z vertreten sein kann) auch die β-Hydroxyäthylgruppe bedeuten. Die so herstellbaren Verbindungen entsprechend der allgemeinen Formel 1, in welcher hier Y oder Z oder beide die β-Hydroxyäthylgruppe bedeuten, lassen sich mittels eines entsprechenden Veresterungs- oder Acylierungsmittels analog bekannten Verfahrensweisen in die entsprechenden erfindungsgemässen Verbindungen der Formel 1 überführen, in welchen Y bzw. Z für eine Äthylgruppe steht, die in β-Stellung durch eine Estergruppe substituiert ist. Bevorzugt ist hierbei als Veresterung die Sulfatisierung, d.h. die Überführung der β-Hydroxyäthylgruppe in die β-Sulfatoäthylgruppe analog den zahlreich aus der Literatur bekannten Verfahrensweisen, wobei als Sulfatisierungsmittel vorzugsweise konzentrierte Schwefelsäure oder Schwefeltrioxid enthaltende Schwefelsäure verwendert wird.

Diese Veresterung, vorzugsweise Sulfatisierung, ist in demjenigen Falle zwingend, wenn Y in den Ausgangsverbindungen der Formeln 4, 6 und 8 für die β-Hydroxyäthylgruppe stand.

Die als Ausgangsverbindungen dienenden Kupplungskomponenten der allgemeinen Formel 4 können analog bekannten Verfahrensweisen, beispielsweise durch Umsetzung einer Aminoverbindung der allgemeinen Formel 9

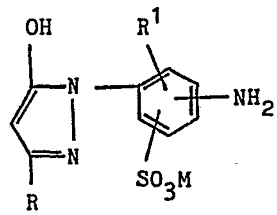
(9)

mit R, $R^1$ und M der obengenannten Bedeutung mit einer Dichlortriazinverbindung der obenangegebenen und definierten allgemeinen Formel 6 oder durch Umsetzung mit Cyanurchlorid (2,4,6-Trichlor-1,3,5-triazin) oder Cyanurfluorid (2,4,6-Trifluor-1,3,5-triazin) zu einer Verbindung der allgemeinen Formel 10

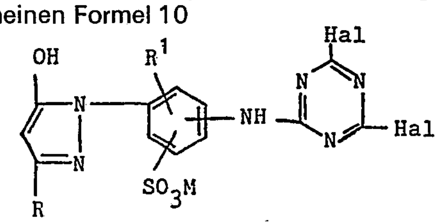
(10)

mit R, $R^1$, M und Hal der obengenannten Bedeutung und diese sodann mit einem Amin der obenangegebenen und definierten allgemeinen Formel 8, hergestellt werden.

Die als Ausgangsverbindungen dienenden Aminoazoverbindungen der allgemeinen Formel 5 lassen sich, ebenso analog bekannten Verfahrensweisen, herstellen, indem man beispielsweise eine Verbindung der oben definierten allgemeinen Formel 3 diazotiert und die erhaltene Diazoniumverbindung mit einer Pyrazolonverbindung der obengenannten und definierten allgemeinen Formel 9 kuppelt.

Ebenso können analog bekannten Verfahrensweisen die als Ausgangsverbindungen dienenden Dihalogentriazinverbindungen entsprechend der allgemeinen Formel 6 beispielsweise durch Umsetzung von Cyanurchlorid oder Cyanurfluorid mit einem Amin der allgemeinen Formel 8 hergestellt werden.

Die Synthese der Dihalogentriazinverbindung der allgemeinen Formel 7 kann, analog bekannten Verfahrensweisen, durch Kondensation von Cyanurchlorid oder Cyanurfluorid mit einer Aminoazoverbindung der obenangegebenen und definierten allgemeinen Formel 5 oder durch Umsetzung einer Diazoniumverbindung eines Amins der obenangegebenen und definierten allgemeinen Formel 3 mit einer Pyrazolonverbindung der obenangegebenen und definierten allgemeinen Formel 10 erfolgen.

Sowohl die Umsetzung von Cyanurchlorid oder Cyanurfluorid mit einer Aminoazoverbindung der allgemeinen Formel 5 zur Verbindung der allgemeinen Formel 7 als auch die Umsetzung von Cyanurchlorid oder Cyanurfluorid mit einer Aminoverbindung der allgemeinen Formel 8 zur Verbindung der allgemeinen Formel 6 kann in organischem oder wässerig-organischem Medium erfolgen. Vorzugsweise geschieht sie in wässerigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise solche des Natriums, Kaliums und Calciums sind; säurebindende Mittel sind ebenso tertiäre Amine, wie beispielsweise Pyridin oder Triäthylamin oder Chinolin. Weiterhin kann der Zusatz von geringen Mengen eines handelsüblichen Netzmittels zweckmässig sein. Diese Kondensationsreaktionen werden bei einer Temperatur zwischen −10 und +40, vorzugsweise zwischen −10 und +30, insbesondere bevorzugt bei einer Temperatur zwischen 0 und +10, sowie bei einem pH-Wert zwischen 1,0 und 7,0, insbesondere zwischen 3,0 und 6,0, durchgeführt.

Die erfindungsgemässe Umsetzung der Dihalogentriazinylaminoverbindungen der allgemeinen Formeln 6, 7 und 10 mit entsprechenden Aminoverbindungen der allgemeinen Formeln 5, 8 oder 9 zu den Verbindungen der allgemeinen Formel 1 bzw. zu den Zwischenverbindungen der allgemeinen Formel 4 kann ebenso in organischem oder wässerig-organischem Medium erfolgen. Vorzugsweise wird sie jedoch in wässerigem Medium durchgeführt, wobei erforderlichenfalls ein säurebindendes Mittel, wie die obenangegebenen, zugesetzt wird. Weiterhin kann der Zusatz von geringen Mengen eines handelsüblichen Netzmittels zweckmässig sein. Die Umsetzung der Aminogruppen mit dem Chlor oder Fluor der Triazinverbindungen in den erfindungsgemässen Verfahren wird vorzugsweise bei einer Temperatur zwischen 0 und 60° C, insbesondere bevorzugt zwischen 10 und 50° C, und bei einem pH-Wert zwischen 2 und 9, insbesondere zwischen 3 und 8, durchgeführt.

Die Diazotierung der Aminoverbindungen der allgemeinen Formel 3 erfolgt analog bekannten Verfahrensweisen, beispielsweise in wässerig-organischem und vor allem in wässerigem, saurem Medium durch salpetrige Säure. Die Umsetzung der Diazoniumverbindungen mit den Pyrazolonverbindungen der allgemeinen Formel 4 bzw. 9 oder 10 wird ebenso analog bekannten Verfahrensweisen, beispielsweise in wässerig-organischem, vorwiegend aber in wässerigem Medium, im schwach sauren bis neutralen, gegebenenfalls sehr schwach alkalischem pH-Bereich ausgeführt.

Aminoverbindungen der allgemeinen Formel 3, die als Diazokomponenten zur Herstellung der erfindungsgemässen Verbindungen dienen können, sind beispielsweise 1-Aminobenzol-2-sulfonsäure, 1-Aminobenzol-3-sulfonsäure, 1-Aminobenzol-4-sulfonsäure, 2-Amino-4-sulfobenzoesäure, 2-Amino-5-sulfobenzoesäure, 4-Amino-2-sulfobenzoesäure, 4-Aminotoluol-2-sulfonsäure, 4-Aminotoluol-3-sulfonsäure, 2-Aminotoluol-4-sulfonsäure, 2-Aminotoluol-5-sulfonsäure, 2-Aminotoluol-4-carbonsäure, Anthranilsäure, 4-Aminobenzoesäure, 2-Aminoanisol-4-sulfonsäure, 2-Aminoanisol-5-sulfonsäure, 4-Aminoanisol-2-sulfonsäure, 4-Aminoanisol-3-sulfonsäure, 3-Chlor-2-aminotoluol-5-sulfonsäure, 4-Chlor-2-aminotoluol-5-sulfonsäure, 5-Chlor-2-aminotoluol-3-sulfonsäure, 5-Chlor-2-aminotoluol-4-sulfonsäure, 6-Chlor-2-aminotoluol-4-sulfonsäure, 6-Chlor-3-aminotoluol-4-sulfonsäure, 2,5-Disulfoanilin, 2,4-Disulfoanilin, 3,5-Disulfoanilin, 2-Aminotoluol-3,5-disulfonsäure, 2-Aminotoluol-4,5-disulfonsäure, 2-Aminotoluol-4,6-disulfonsäure, 4-Aminotoluol-2,5-disulfonsäure, 2-(3'-Sulfo-4'-aminophenyl)-6-methylbenzthiazol-7-sulfonsäure, 4-Nitro-4'-aminostilben-2,2'-disulfonsäure, 2-Aminonaphthalin-1-sulfonsäure, 2-Aminonaphthalin-5-sulfonsäure, 2-Aminonaphthalin-6-sulfonsäure, 2-Aminonaphthalin-7-sulfonsäure, 2-Aminonaphthalin-8-sulfonsäure, 1-Aminonaphthalin-2-sulfonsäure, 1-Aminonaphthalin-3-sulfonsäure, 1-Aminonaphthalin-4-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-8-sulfonsäure, 2-Aminonaphtalin-4,8-disulfonsäure, 2-Aminonaphthalin-6,8-disulfonsäure, 2-Aminonaphthalin-1,5-disulfonsäure, 2-Aminonaphthalin-1,7-disulfonsäure, 2-Aminonaphthalin-5,7-disulfonsäure, 2-Aminonaphthalin-3,6-disulfonsäure, 2-Aminonaphthalin-3,7-disulfonsäure, 2-Aminonaphthalin-4,7-disulfonsäure, 1-Aminonaphthalin-2,4-disulfonsäure, 1-Aminonaphthalin-2,5-disulfonsäure, 1-Aminonaphthalin-3,6-disulfonsäure, 1-Aminonaphthalin-3,7-disulfonsäure, 1-Aminonaphthalin-3,8-disulfonsäure, 1-Aminonaphthalin-4,6-disulfonsäure, 1-Aminonaphthalin-4,7-disulfonsäure, 1-Aminonaphthalin-4,8-disulfonsäure, 1-Aminonaphthalin-5,7-disulfonsäure, 1-Aminonaphthalin-6,8-disulfonsäure, 2-Aminonaphthalin-3,6,8-trisulfonsäure, 2-Aminonaphthalin-4,6,8-trisulfonsäure, 2-Aminonaphthalin-1,5,7-trisulfonsäure, 1-Aminonaphthalin-2,4,7-trisulfonsäure, 1-Aminonaphthalin-1,5,7-trisulfonsäure, 1-Aminonaphthalin-2,4,7-trisulfonsäure, 1-Aminonaphthalin-2,4,8-trisulfonsäure, 1-Aminonaphthalin-3,5,7-trisulfonsäure, 1-Aminonaphthalin-3,6,8-trisulfonsäure, 1-Aminonaphthalin-4,6,8-trisulfonsäure, 1-Amino-3-(β-sulfatoäthylsulfonyl)benzol, 1-Amino-2-methoxy-5-(β-sulfatoäthylsulfonyl)benzol, 1-Amino-2-methoxy-4-(β-sulfatoäthylsulfonyl)-benzol, 1-Amino-2-methyl-5-(β-sulfatoäthylsulfonyl)benzol, 1-Amino-2-methyl-4-(β-sulfatoäthylsulfonyl)benzol, 1-Amino-4-methoxy-5-(β-sulfatoäthylsulfonyl)benzol, 1-Amino-4-methyl-5-(β-sulfatoäthylsulfonyl)benzol, 1-Amino-2-methoxy-5-methyl-4-(β-sulfatoäthylsulfonyl)-benzol, 1-Amino-2,5-dimethoxy-4-(β-sulfatoäthylsulfonyl)benzol, 1-Amino-2,4-dimethoxy-5-(β-sulfatoäthylsulfonyl)benzol, 1-Amino-2-methyl-5-methoxy-4-(β-sulfatoäthylsulfonyl)-benzol, 2-Chlor-1-amino-5-(β-sulfatoäthylsulfonyl)benzol, 4-Chlor-1-amino-2-methyl-3-(β-sulfatoäthylsulfonyl)benzol, 5-Chlor-1-amino-2-methoxy-4-(β-sulfatoäthylsulfonyl)benzol und 1-Amino-4-(β-sulfatoäthylsulfonyl)benzol-2-sulfonsäure sowie die entsprechenden β-Thiosulfatoäthylsulfonyl-, β-Phosphatoäthylsulfonyl-, β-Chloräthylsulfonyl-, β-Acetoxyäthylsulfonyl- und Vinylsulfonylverbindungen und gegebenenfalls β-Hydroxyäthylsulfonylverbindungen dieser β-Sulfatoäthylsulfonylverbindungen, des weiteren bevorzugt 1-Amino-4-(β-sulfatoäthylsulfonyl)benzol und dessen entsprechende Thiosulfatoäthyl-, Phosphatoäthyl-, Chloräthyl-, Acetoxyäthyl- und Vinylabkömmlinge und gegebenenfalls β-Hydroxyäthylabkömmlinge.

Aminoverbindungen der allgemeinen Formel 8, die als Ausgangsverbindungen zur Herstellung der erfindungsgemässen Verbindungen dienen, sind beispielsweise 1-Amino-3-(β-sulfatoäthylsulfonyl)benzol, 1-Amino-2-methoxy-5-(β-sulfatoäthylsulfonyl)benzol, 1-Amino-2-methoxy-4-(β-sulfatoäthylsulfonyl)benzol, 1-Amino-2-methyl-5-(β-sulfatoäthylsulfonyl)benzol, 1-Amino-2-methyl-4-(β-sulfatoäthylsulfonyl)benzol, 1-Amino-4-methoxy-5-(β-sulfatoäthylsulfonyl)benzol, 1-Amino-4-methyl-5-(β-sulfatoäthylsulfonyl)benzol, 1-Amino-2-methoxy-5-methyl-4-(β-sulfatoäthylsulfonyl)benzol, 1-Amino-2,5-dimethoxy-4-(β-sulfatoäthylsulfonyl)benzol, 1-Amino-2,4-dimethoxy-5-(β-sulfatoäthylsulfonyl)benzol, 1-Amino-2-methyl-5-methoxy-4-(β-sulfatoäthylsulfonyl)benzol, 2-Chlor-1-amino-5-(β-sulfatoäthylsulfonyl)benzol, 4-Chlor-1-amino-2-methyl-3-(β-sulfatoäthylsulfonyl)benzol, 5-Chlor-1-amino-2-methoxy-4-(β-sulfatoäthylsulfonyl)benzol sowie die entsprechenden β-Thiosulfatoäthylsulfonyl-, β-Phosphatoäthylsulfonyl-, β-Chloräthylsulfonyl-, β-Acetoxyäthylsulfonyl- und Vinylsulfonylverbindungen und gegebenenfalls β-Hydroxyäthylsulfonylverbindungen dieser β-Sulfatoäthylsulfonylverbindungen, des weiteren bevorzugt 1-Amino-4-(β-sulfatoäthylsulfonyl)benzol und dessen entsprechende Thiosulfatoäthyl-, Phosphatoäthyl-, Chloräthyl-, Acetoxyäthyl- und Vinylabkömmlinge und gegebenenfalls β-Hydroxyäthylabkömmlinge.

Pyrazolonverbindungen entsprechend der allgemeinen Formel 9, die als Ausgangsverbindungen zur Herstellung der erfindungsgemässen Azoverbindungen dienen, sind beispielsweise 1-(3-Amino-6-sulfophenyl)-3-methyl-5-pyrazolon, 1-(4-Amino-3-sulfophenyl)-3-methyl-5-pyrazolon, 1-(4-Amino-2-sulfophenyl)-3-methyl-5-pyrazolon, 1-(3-Amino-6-sulfophenyl)-5-pyrazolon-3-carbonsäure, 1-(4-Amino-3-sulfophenyl)-5-pyrazolon-3-carbonsäure, 1-(3-Amino-5-sulfo-6-methylphenyl)-5-pyrazolon-3-carbonsäure, 1-(2-Methyl-3-amino-5-sulfophenyl)-5-pyrazolon-3-carbonsäure, 1-(2-Methyl-3-amino-5-sulfophenyl)-3-methyl-5-pyrazolon, 1-(3-Amino-5-sulfo-6-methylphenyl)-3-methyl-5-pyrazolon und 1-(4-Methyl-2,5-disulfophenyl)-5-pyrazolon-3-carbonsäure.

Die Abscheidung und Isolierung der erfindungsgemäss hergestellten Verbindungen der allgemeinen Formel 1 aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugeführt werden kann.

Die erfindungsgemässen Verbindungen der allgemeinen Formel 1 haben faserreaktive Eigenschaften und besitzen sehr gute Farbstoffeigenschaften. Sie können deshalb zum Färben (einschliesslich Bedrucken) von hydroxygruppenhaltigen und/oder carbonamidgruppenhaltigen Materialien verwendet werden. Auch können die bei der Synthese der erfindungsgemässen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemässen Verbindungen der allgemeinen Formel 1 zum Färben (einschliesslich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen, indem man die Monoazoverbindung der allgemeinen Formel 1 in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemässen Verbindungen der allgemeinen Formel 1 lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wässerigem Bad bei Temperaturen zwischen 60 und 105, gegebenenfalls bei Temperaturen bis zu 120° C unter Druck und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eingentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60° C, durch Dämpfen oder mit Trockenhitze in üblicher Weise fixiert werden kann.

Ebenfalls nach den üblichen Druckverfahren für Cellulosefasern, die einphasig – beispielsweise durch Bedrucken mit einer Natriumbicarbonat oder ein anderes säurebindendes Mittel enthaltenden Druckpaste und anschliessendes Dämpfen bei 100 bis 103° C – oder zweiphasig – beispielsweise durch Bedrucken mit neutraler oder schwach saurer Druckfarbe und anschliessendem Fixieren entweder durch Hindurchführen durch ein heisses elektrolythaltiges alkalisches Bad oder durch Überklotzen mit einer alkalischen elektrolythaltigen Klotzflotte mit anschliessendem Verweilen oder Dämpfen oder Behandlung durch Trockenhitze dieses überklotzten Materials – durchgeführt werden können, erhält man farbstarke Drucke mit gutem Stand der Konturen und einem klaren Weissfond. Der Ausfall der Drucke ist von wechselnden Fixierbedingungen nur wenig abhängig.

Bei der Fixierung mittels Trockenhitze nach den üblichen Thermofixierverfahren verwendet man Heissluft von 120 bis 200° C. Neben dem üblichen Wasserdampf von 101 bis 103° C kann auch überhitzter Dampf und Druckdampf von Temperaturen bis zu 160° C eingesetzt werden.

Die säurebindenden und die Fixierung der Verbindung der Formel 1 auf den Cellulosefasern bewirkenden Mittel sind beispielsweise wasserlösliche basische Salze der Alkalimtalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemässen Verbindungen mit den säurebindenden Mitteln, gegebenenfalls unter Wärmeeinwirkung, werden die erfindungsgemässen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Nassechtheiten, zumal sich nicht fixierte Farbstoffanteile leicht wegen ihrer guten Kaltwasserlöslichkeit auswaschen lassen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Äthylenoxid. In der Regel wird das zu färbende Material bei einer Temperatur von etwa 40° C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98° C durchgeführt. Die Färbungen können aber auch bei Siedetemperatur oder bei Temperaturen bis zu 120° C (unter Druck) ausgeführt werden.

Die mit den erfindungsgemässen Verbindungen der allgemeinen Formel 1 hergestellten Färbungen und Drucke besitzen grünstichig gelbe bis gelbe Nuancen und zeichnen sich in der Regel durch hohe Farbstärke und klaren Farbton aus. Insbesondere besitzen die Färbungen und Drucke auf

Cellulosefasermaterialien eine sehr gute Lichtechtheit und gute bis sehr gute Nassechtheiten, wie beispielsweise gute bis sehr gute Waschechtheiten, gute Chlorbadewasser-, Walk-, Wasser-, Seewasser-, Überfärbe- und Schweissechtheiten, desweiteren eine gute Plissierechtheit, Bügelechtheit und Reibechtheit.

Ebenso von Bedeutung ist die erfindungsgemässe Verwendung der Verbindungen der allgemeinen Formel 1 auch für das faserreaktive Färben von Wolle. Insbesondere lässt sich auch filzfrei oder filzarm ausgerüstete Wolle (vgl. beispielsweise H. Rath, „Lehrbuch der Textilchemie", Springer-Verlag, 3. Aufl. (1972), S. 295 bis 299, insbesondere die Ausrüstung nach dem sogenannten Hercosett-Verfahren (S. 298); „J. Soc. Dyers and Colourists", *1972*, 93-99, und *1975*, 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel 1 bevorzugt zunächst aus saurem Färbebad mit einem pH von etwa 3,5 bis 5,5 unter Kontrolle des pH-Wertes dem Ausziehprozess unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100° C durchgeführt, jedoch können sie auch in geschlossenen Färbeapparaturen bei Temperaturen bis zu 106° C erfolgen. Da die Wasserlöslichkeit der Verbindungen der allgemeinen Formel 1 sehr gut ist, lassen sie sich auch mit Vorteil bei üblichen kontinuierlichen Färbeverfahren einsetzen. Die Farbstärke der erfindungsgemässen Verbindungen der allgemeinen Formel 1 ist sehr hoch. Sie liefern auf den Fasermaterialien, insbesondere beim reaktiven Färben von Wolle, klare, grünstichig gelbe bis gelbe Färbungen. Bei Anwendung von Färbetemperaturen von 100 bis 106° C ist eine hohe Baderschöpfung festzustellen.

Bei den mit den erfindungsgemässen Verbindungen der allgemeinen Formel 1 erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso lässt sich Material aus Wollfasern unterschiedlicher Provenienz mit den erfindungsgemässen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemässen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Nassechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Nassechtheitseigenschaften insbesondere die ausgezeichnete alkalische Schweissechtheit und sehr gute Waschechtheit bei 60° C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmässig beschriebenen Verbindungen sind in Form der freien Säuren angegeben; im allgemeinen werden sie in Form ihrer Salze, wie Natrium- und Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

*Beispiel 1:*

a) Eine wässerige Lösung mit einem pH-Wert von 6 bis 7 von 57 Teilen 1-Amino-4-(β-sulfatoäthylsulfonyl)benzol in 300 Teilen Wasser wird in eine Suspension von 38,6 Teilen Cyanurchlorid und 1 Teil eines handelsüblichen Netzmittels in 50 Teilen Wasser und 200 Teilen Eis einlaufen gelassen. Mittels Natriumbicarbonat wird während der Acylierungsreaktion ein pH-Wert zwischen 2 und 4 gehalten, während die Mischung kräftig bei einer Temperatur zwischen 0 und 10° C gerührt wird. Die Umsetzung beträgt über 99%.

b) 1000 Vol.-Teile einer wässerigen neutralen Lösung von 97 Teilen der Aminoazoverbindung der Formel

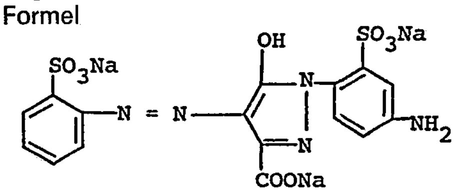

(hergestellt durch Kuppeln von diazotierter Aminobenzol-2-sulfonsäure auf 1-[4-Amino-2-sulfophenyl]-5-pyrazolon-3-carbonsäure) werden zu der gemäss a hergestellten Suspension gegeben. Innerhalb von 2 h wird die Reaktionstemperatur auf 40 bis 45° C erhöht und die Reaktionsmischung etwa 3 h bei einer Temperatur zwischen 40 und 45° C bis zur beendeten Acylierungsreaktion gerührt; mit Natriumbicarbonat wird ein pH-Wert zwischen 5 und 5,5 gehalten.

Die so hergestellte erfindungsgemässe Azoverbindung wird in üblicher Weise isoliert, beispielsweise durch Eindampfen der neutralen Lösung oder durch Sprühtrocknen oder durch Aussalzen mit einem Elektrolytsalz, wie beispielsweise Natrium- oder Kaliumchlorid. Man erhält ein gelbes Pulver, das das Alkalimetallsalz, wie Natrium- oder/und Kaliumsalz, der Verbindung der Formel

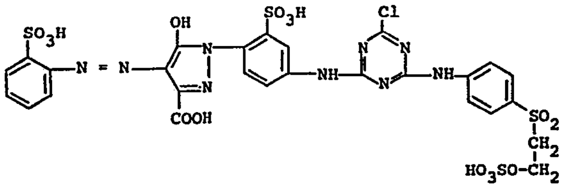

enthält. Diese erfindungsgemässe Azoverbindung besitzt sehr gute Farbstoffeigenschaften und liefert auf den in der Beschreibung genannten Materialien, wie insbesondere Cellulosefasermaterialien, beispielsweise Baumwolle, nach den in der Technik, insbesondere für faserreaktive Farbstoffe, üblichen Applikations- und Fixiermethoden, farbstarke, grünstichig gelbe Färbungen und Drucke von guter Lichtechtheitseigenschaft und von guten Nassechtheitseigenschaften, wie insbesondere guten Wasch-, Walk-, Überfärber-, Chlorbadewasser- und Schweissechtheiten.

*Beispiel 2:*

Eine Suspension von 57 Teilen 4-(β-Sulfatoäthylsulfonyl)anilin in 300 Teilen Wasser wird auf einen pH-Wert von 4,0 eingestellt und mittels Eis auf ein Temperatur zwischen −2 und 0° C gekühlt. Unter kräftigem Rühren werden sodann 32 Teile 2,4,6-Trifluor-1,3,5-triazin (Cyanurflorid) zugegeben, wobei gleichzeitig mittels einer wässerigen Natriumbicarbonatlösung der pH-Wert bei 3,5 gehalten wird. Nach einigen Minuten ist kein Amin mehr nachweisbar, und die Suspension wird sodann, wie im Beispiel 1 beschrieben, jedoch hier bei einer Temperatur zwischen 10 und 20° C, mit dem im Beispiel 1 angegebenen Trinatriumsalz der Aminoazoverbindung umgesetzt. Nach Isolierung erhält man ein gelbes Pulver, das neben Elektrolytsalzen das Alkalimetallsalz, wie Natrium- oder/ und Kaliumsalz der Verbindung der Formel

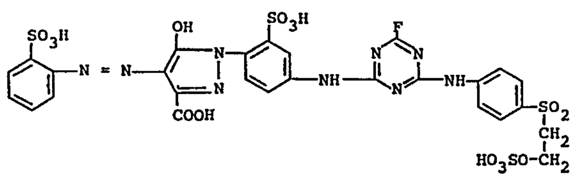

enthält. Diese erfindungsgemässe Azoverbindung zeigt sehr gute faserreaktive Farbstoffeigenschaften und färbt beispielsweise Cellulosefasermaterialien in farbstarken, grünstichig gelben Tönen nach den in der Technik üblichen Applikations- und Fixiermethoden. Die erhaltenen Färbungen und Drucke zeigen sehr gute Lichtechtheiten und Nassechtheitseigenschaften, wie beispielsweise gute Wasch-, Walk-, Schweiss-, Überfärbe- und Chlorbadewasserechtheiten.

*Beispiel 3:*

a) 1000 Vol.-Teile einer auf unter 10° C gekühlten wässerigen, neutralen Lösung mit 97 Teilen der in Beispiel 1 verwendeten Aminoazoausgangsverbindung werden zu einer Suspension aus 38,6 Teilen Cyanurchlorid in 50 Teilen Wasser und 200 Teilen Eis einfliessen gelassen. Dieses Reaktionsgemisch wird etwa 4 h bei einer Temperatur zwischen 0 und 10° C kräftig gerührt, während der pH-Wert mittels Natriumbicarbonat bei 3,5 bis 4,5 gehalten wird, bis die Acylierungsreaktion beendet ist.

b) 400 Vol.-Teile einer wässerigen, neutralen Lösung von 59 Teilen 4-(β-Sulfatoäthylsulfonyl)anilin gibt man langsam unter Rühren in den unter a hergestellten Ansatz. Sodann wird die Reaktionstemperatur innerhalb von 2 h auf 40 bis 45° C erhöht und die Reaktionsmischung noch etwa 12 h bei 40 bis 50° C weitergerührt, während mittels Natriumcarbonat ein pH-Wert zwischen 4,5 und 6,5 gehalten wird.

Die so hergestellte erfindungsgemässe Azoverbindung wird in üblicher Weise isoliert. Sie ist mit der gemäss Beispiel 1 hergestellten erfindungsgemässen Azoverbindung identisch und zeigt die gleichen guten färberischen Eigenschaften und guten Echtheitseigenschaften wie diese Azoverbindung des Beispieles 1.

*Beispiel 4:*

Man synthetisiert eine erfindungsgemässe Azoverbindung gemäss den Verfahrensangaben des Beispieles 1, ersetzt jedoch in dem Beispiel 1a das 4-(β-Sulfatoäthylsulfonyl)anilin durch 60 Teile 4-(β-Thiosulfatoäthylsulfonyl)anilin.

Nach Aufarbeitung der Syntheselösung und Isolierung erhält man ein elektrolythaltiges Pulver mit dem Alkalimetallsalz der Verbindung der Formel

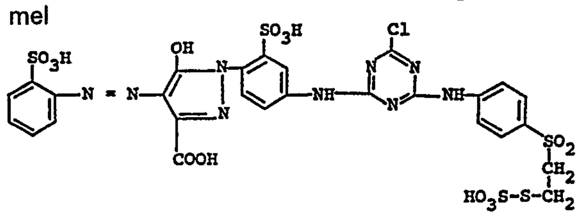

das sehr gute Farbstoffeigenschaften besitzt und beispielsweise auf Baumwolle nach den in der Technik üblichen Applikations- und Fixiermethoden, insbesondere solchen für faserreaktive Farbstoffe, farbstarke, grünstichig gelbe Färbungen und Drucke von guten Licht- und Nassechtheitseigenschaften, wie guten Wasch-, Walk- und Überfärbeechtheiten sowie guten Schweissechtheiten, liefert.

*Beispiel 5:*

Zur Herstellung einer erfindungsgemässen Azoverbindung verfährt man gemäss den Angaben des Beispieles 3, ersetzt jedoch dort die im Beispiel 3b verwendete wässerige Lösung des 4-(β-Sulfatoäthylsulfonyl)anilin durch eine Lösung von 39 Teilen 4-Vinylsulfonylanilin in 200 Vol.-Teilen Aceton.

Nach der üblichen Aufarbeitung der Syntheselösung und Isolierung erhält man ein elektrolythaltiges Pulver mit dem Alkalimetallsalz, wie beispielsweise Natriumsalz der Verbindung der Formel

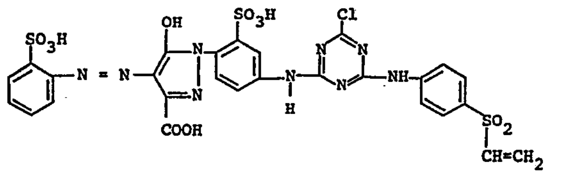

Diese Verbindung zeigt sehr gute faserreaktive Farbstoffeigenschaften und liefert nach den in der Technik üblichen Applikations- und Fixiermethoden beispielsweise auf Baumwolle kräftige, grünstichtig gelbe Färbungen und Drucke von guten Licht- und Nassechtheitseigenschaften; die Qualität der mit dieser erfindungsgemässen Azoverbindung erhältlichen Färbungen ist mit derjenigen vergleichbar, die die mit der erfindungsgemässen Azoverbindung des Beispieles 1 erhältlichen Färbungen besitzen.

*Beispiel 6:*

Man verfährt gemäss der Verfahrensweise des Beispieles 3, ersetzt jedoch dort die wässerige Lösung des 4-(β-Sulfatoäthylsulfonyl)anilins im Verfahrensschritt b durch 46 Teile pulverförmiges 4-(β-Chloräthylsulfonyl)anilin.

Nach Aufarbeitung der Syntheselösung und Isolierung erhält man ein elektrolythaltiges Pulver mit dem Alkalimetallsalz der Verbindung der Formel

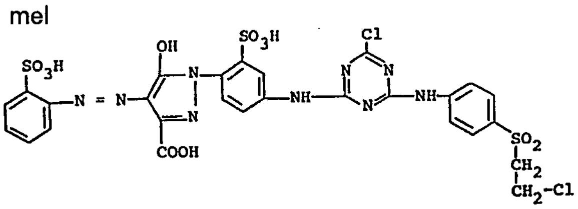

das sehr gute Farbstoffeigenschaften besitzt und beispielsweise Baumwolle nach den in der Technik für faserreaktive Farbstoffe üblichen Applikations- und Fixiermethoden in farbstarken, grünstichig gelben Tönen von guten Licht- und Nassechteiheitseigenschaften färbt.

*Beispiel 7:*

Zur Herstellung einer erfindungsgemässen Azoverbindung arbeitet man gemäss den Verfahrensweisen des Beispieles 1 oder den Verfahrensweisen des Beispieles 3, jedoch mit der Abänderung, dass man jeweils anstelle der dort als Ausgangsverbindung verwendeten Aminoazoverbindung 99 Teile der Aminoazoverbindung der Formel

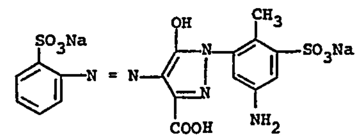

einsetzt. Nach Aufarbeitung der Syntheselösung und Isolierung erhält man ein elektrolythaltiges Pulver mit dem Alkalimetallsalz, wie Natrium- oder/und Kaliumsalz, der Verbindung der Formel

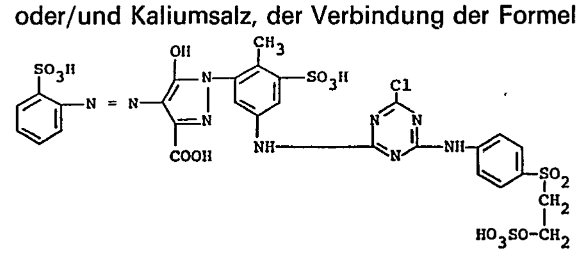

Diese erfindungsgemässe Azoverbindung zeigt sehr gute faserreaktive Farbstoffeigenschaften und liefert nach den in der Technik üblichen Applikations- und Fixiermethoden für faserreaktive Farbstoffe beispielsweise auf Baumwolle farbstarke, grünstichig gelbe Färbungen und Drucke von sehr guten Licht- und Nassechtheitseigenschaften.

*Beispiele 8 bis 72:*

In den nachfolgenden Tabellenbeispielen sind weitere erfindungsgemässe Monoazoverbindungen entsprechend der allgemeinen Formel 1 mit Hilfe ihrer Komponenten, aus denen sie zusammen mit dem Rest des Cyanurchlorids oder Cyanurfluorids aufgebaut sind, beschrieben. Sie lassen sich aus diesen Aminoverbindungen und Cyanurchlorid bzw. Cyanurfluorid und den Kupplungskomponenten in erfindungsgemässer Weise, wie beispielsweise nach einer in den obigen Beispielen 1 bis 8 beschriebenen Verfahrensvariante, herstellen. Sie zeigen sehr gute faserreaktive Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel für die Färbung auf Baumwolle angegebenen Farbton.

In diesen Tabellenbeispielen haben die Formelglieder $Z_1$ bis $Z_6$ folgende Bedeutungen:

$Z_1$: $-SO_2-CH_2-CH_2-OSO_3M$,
$Z_2$: $-SO_2-CH_2-CH_2-S-SO_3M$,
$Z_3$: $-SO_2-CH_2-CH_2-Cl$,
$Z_4$: $-SO_2-CH=CH_2$,
$Z_5$: $-SO_2-CH_2-CH_2-OCO-CH_3$,
$Z_6$: $-SO_2-CH_2-CH_2-OPO_3M_2$,

in welchen M die anfangs in der Beschreibung genannte Bedeutung besitzt.

| Beispiel | Amin der allg. Formel (8) | Amin der allg. Formel (3) | Kupplungskomponente der allg. Formel (9) | Farbton |
|---|---|---|---|---|
| 8 | 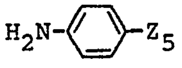 | Aminobenzol-2-sulfonsäure | 1-(3-Amino-5-sulfo-6-methylphenyl)-5-pyrazolon-3-carbonsäure | grünst. gelb |
| 9 | 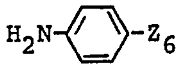 | dito | dito | grünst. gelb |

| Bei-spiel | Amin der allg. Formel (8) | Amin der allg. Formel (3) | Kupplungskomponente der allg. Formel (9) | Farbton |
|---|---|---|---|---|
| 10 | 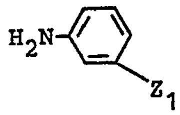 | dito | dito | grünst. gelb |
| 11 | 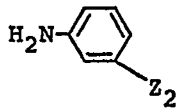 | dito | dito | grünst. gelb |
| 12 | 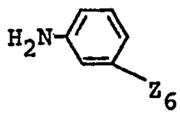 | dito | dito | grünst. gelb |
| 13 | 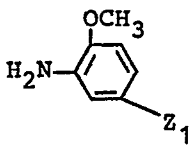 | dito | dito | grünst. gelb |
| 14 | 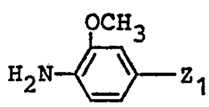 | dito | dito | grünst. gelb |
| 15 | 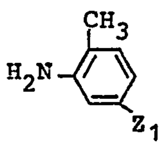 | dito | dito | grünst. gelb |
| 16 | 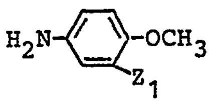 | dito | dito | grünst. gelb |
| 17 | 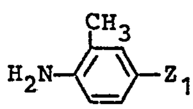 | dito | dito | grünst. gelb |
| 18 | 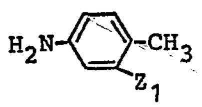 | dito | dito | grünst. gelb |
| 19 | 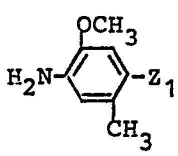 | dito | dito | grünst. gelb |
| 20 | 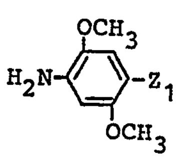 | dito | dito | grünst. gelb |
| 21 | 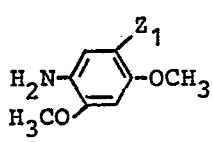 | dito | dito | grünst. gelb |

| Beispiel | Amin der allg. Formel (8) | Amin der allg. Formel (3) | Kupplungskomponente der allg. Formel (9). | Farbton |
|---|---|---|---|---|
| 22 | 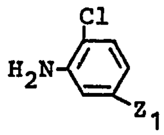 | dito | dito | grünst. gelb |
| 23 | 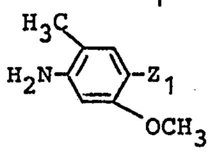 | Aminobenzol-2-sulfonsäure | 1-(3-Amino-5-sulfo-6-methylphenyl)-5-pyrazolon-3-carbonsäure | grünst. gelb |
| 24 | 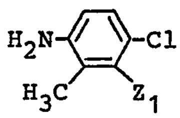 | dito | dito | grünst. gelb |
| 25 | 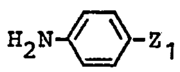 | 3-Aminobenzol-sulfonsäure | dito | gelb |
| 26 | 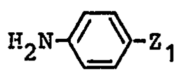 | 3-Aminobenzol-sulfonsäure | dito | gelb |
| 27 | dito | 4-Aminobenzol-sulfonsäure | dito | gelb |
| 28 | dito | Aminobenzol-2,4-disulfonsäure | dito | grünst. gelb |
| 29 | dito | Aminobenzol-2,5-disulfonsäure | dito | grünst. gelb |
| 30 | dito | 4-Aminotoluol-3-sulfonsäure | dito | grünst. gelb |
| 31 | dito | 2-Aminonaphthalin-1,5-disulfonsäure | dito | grünst. gelb |
| 32 | dito | 2-Aminonaphthalin-1-sulfonsäure | dito | grünst. gelb |
| 33 | dito | Aminobenzol-2-sulfonsäure | dito | grünst. gelb |
| 34 | 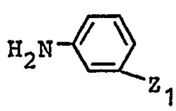 | dito | 1-(4-Amino-3-sulfophenyl)-5-pyrazolon-3-carbonsäure | grünst. gelb |
| 35 | 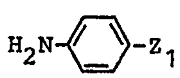 | Aminobenzol-2,4-disulfonsäure | dito | grünst. gelb |
| 36 | dito | Aminobenzol-2,5-disulfonsäure | dito | grünst. gelb |
| 37 | 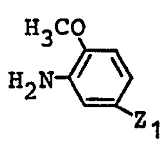 | 2-Aminonaphthalin-6,8-disulfonsäure | dito | gelb |
| 38 | 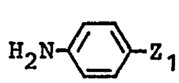 | Aminobenzol-2-sulfonsäure | 1-(3-Amino-6-sulfophenyl)-5-pyrazolon-3-carbonsäure | grünst. gelb |
| 39 | dito | dito | 1-(4-Amino-3-sulfophenyl)-3-methyl-5-pyrazolon | gelb |
| 40 | dito | dito | 1-(3-Amino-6-sulfophenyl)-3-methyl-5-pyrazolon | gelb |

| Bei-spiel | Amin der allg. Formel (8) | Amin der allg. Formel (3) | Kupplungskomponente der allg. Formel (9) | Farbton |
|---|---|---|---|---|
| 41 | dito | dito | 1-(4-Amino-2-sulfophenyl)-3-methyl-5-pyrazolon | gelb |
| 42 | dito | dito | 1-(2-Methyl-3-amino-5-sulfophenyl)-5-pyrazolon-3-carbonsäure | gelb |
| 43 | dito | dito | 1-(2-Methyl-3-amino-5-sulfophenyl)-3-methyl-5-pyrazolon | gelb |
| 44 | 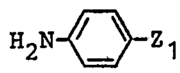 | Aminobenzol-2-sulfonsäure | 1-(3-Amino-5-sulfo-6-methylphenyl)-3-methyl-5-pyrazolon | gelb |
| 45 | dito | dito | 1-(4-Amino-2,5-disulfophenyl)-5-pyrazolon-3-carbonsäure | gelb |
| 46 | dito | 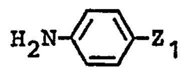 | 1-(3-Amino-5-sulfo-6-methylphenyl)-5-pyrazolon-3-carbonsäure | gelb |
| 47 | dito | 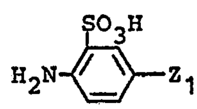 | dito | grünst. gelb |
| 48 | dito | 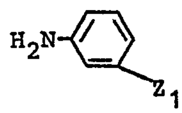 | dito | gelb |
| 49 | dito | 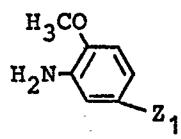 | dito | gelb |
| 50 | dito | 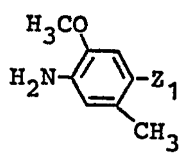 | dito | gelb |
| 51 | dito | 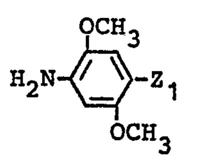 | dito | gelb |
| 52 | 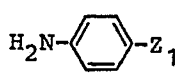 | 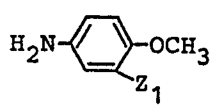 | dito | gelb |
| 53 | dito | 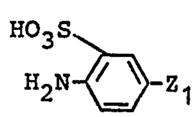 | 1-(4-Amino-3-sulfophenyl)-5-pyrazolon-3-carbonsäure | grünst. gelb |
| 54 | dito | 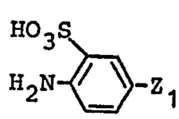 | 1-(3-Amino-6-sulfophenyl)-3-methylpyrazolon | grünst. gelb |
| 55 | dito | 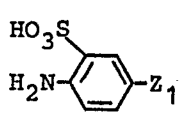 | 1-(4-Amino-3-sulfophenyl)-3-methyl-5-pyrazolon | grünst. gelb |

| Beispiel | Amin der allg. Formel (8) | Amin der allg. Formel (3) | Kupplungskomponente der allg. Formel (9) | Farbton |
|---|---|---|---|---|
| 56 | dito | dito | 1-(4-Amino-2-sulfophenyl)-3-methyl-5-pyrazolon | grünst. gelb |
| 57 | dito | dito | 1-(3-Amino-6-sulfophenyl)-5-pyrazolon-3-carbonsäure | grünst. gelb |
| 58 | dito | 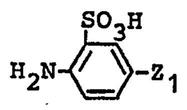 | 1-(2-Methyl-3-amino-5-sulfophenyl)-5-pyrazolon-3-carbonsäure | grünst. gelb |
| 59 | dito | dito | 1-(2-Methyl-3-amino-5-sulfophenyl)-3-methyl-5-pyrazolon | grünst. gelb |
| 60 | dito | dito | 1-(3-Amino-5-sulfo-6-methylphenyl)-3-methyl-5-pyrazolon | grünst. gelb |
| 61 | dito | dito | 1-(4-Amino-2,5-disulfophenyl)-5-pyrazolon-3-carbonsäure | grünst. gelb |
| 62 | 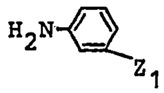 | 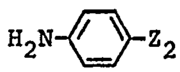 | 1-(3-Amino-5-sulfo-6-methylphenyl)-5-pyrazolon-3-carbonsäure | gelb |
| 63 | 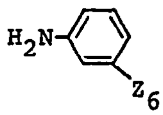 | 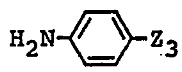 | dito | gelb |
| 64 | 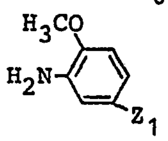 | 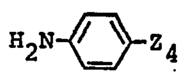 | dito | gelb |
| 65 | 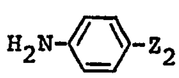 | 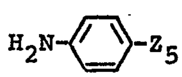 | dito | gelb |
| 66 | 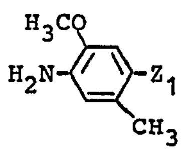 | 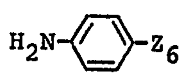 | dito | gelb |
| 67 | 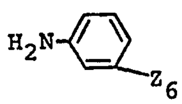 | 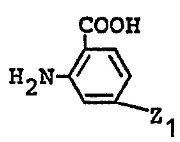 | dito | gelb |
| 68 | 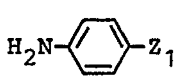 | Amino-2,5-dichlor-benzol-4-sulfonsäure | 1-(4-Amino-3-sulfophenyl)-5-pyrazolon-3-carbonsäure | gelb |
| 69 | 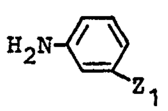 | 3-Amino-5-sulfo-benzoesäure | 1-(2-Methyl-3-amino-5-sulfophenyl)-3-methyl-5-pyrazolon | gelb |
| 70 | 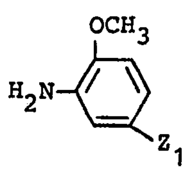 | 4-Aminoanisol-3-sulfonsäure | 1-(2-Methyl-3-amino-5-sulfophenyl)-5-pyrazolon-3-carbonsäure | gelb |
| 71 | 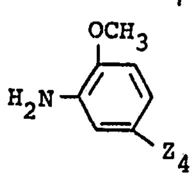 | 2-Aminonaphthalin-4,6,8-trisulfonsäure | dito | gelb |

| Beispiel | Amin der allg. Formel (8) | Amin der allg. Formel (3) | Kupplungskomponente der allg. Formel (9) | Farbton |
|---|---|---|---|---|
| 72 | 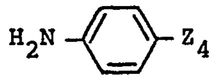 | 2-Aminonaphthalin-3,6,8-trisulfonsäure | 1-(4-Amino-6-sulfophenyl)-5-pyrazolon-3-carbonsäure | gelb |
| 73 | 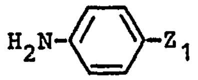 | dito | 1-(3-Amino-5-sulfo-6-methylphenyl)-5-pyrazolon-3-carbonsäure | gelb |
| 74 | dito | 2-Aminonaphthalin-4,6,8-trisulfonsäure | dito | gelb |
| 75 | 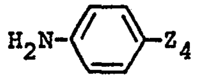 | dito | dito | gelb |
| 76 | 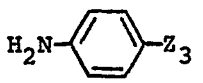 | dito | dito | gelb |
| 77 | 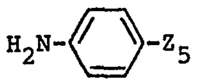 | 2-Aminophthalin-4,6,8-trisulfonsäure | 1-(3-Amino-5-sulfo-6-methylphenyl)-5-pyrazolon-3-carbonsäure | gelb |
| 78 | 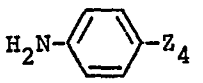 | 1-Aminonaphthalin-2,4,7-trisulfonsäure | dito | gelb |
| 79 | 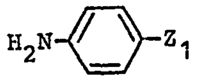 | dito | dito | gelb |
| 80 | dito | 2-Aminonaphthalin-1,5,7-trisulfonsäure | dito | gelb |
| 81 | 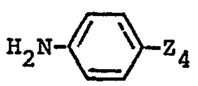 | dito | dito | gelb |
| 82 | 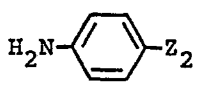 | Aminobenzol-2-sulfonsäure | dito | grünst. gelb |
| 83 | 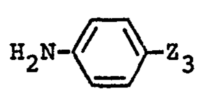 | dito | dito | grünst. gelb |
| 84 | 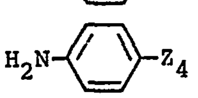 | dito | dito | grünst. gelb |
| 85 | 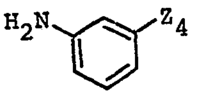 | dito | dito | grünst. gelb |

*Anwendungsbeispiel 1:*

20 Teile der erfindungsgemässen Verbindung (als Natriumsalz) von Beispiel 1 oder 3 werden zusammen mit 50 Teilen Harnstoff in 300 Teilen Wasser gelöst. Die Lösung wird unterhalb von 40° C in 400 Teilen einer neutralen, wässerigen 4%igen Alginatverdickung eingerührt. Man gibt 10 Teile Natriumcarbonat hinzu und füllt das Ganze mit der 4%igen wässerigen Alginatverdickung auf eine Gesamtmenge von 1000 Teilen auf. Man rührt gut durch und bedruckt mit der so hergestellten Druckpaste ein Baumwollgewebe, das nach dem Trocknen bei 60° C in einem handelsüblichen Dämpferaggregat 5 min lang mit Sattdampf von 100 bis 103° C behandelt wird. Der so hergestellte Druck wird anschliessend durch Spülen mit kaltem und heissem Wasser, durch Waschen mit einem neutralen Waschmittel und nochmaliges Spülen mit Wasser fertiggestellt. Nach dem Trocknen der Ware erhält man einen farbstarken grünstichtig gelben Druck von sehr guter Lichtechtheit und von sehr guten Nassechtheitseigenschaften.

*Anwendungsbeispiel 2:*

Ein Gewebe aus mercerisierter Baumwolle wird mit einer wässerigen Färbeflotte von 20° C bei einer Flottenaufnahme von 80%, bezogen auf das Warengewicht, geklotzt, die im Liter 20 g des Natriumsalzes der erfindungsgemässen Azoverbindung von Beispiel 1 oder 3 sowie 18 g 33%ige Natronlauge enthält. Das geklotzte Gewebe wird auf eine Docke gewickelt, in eine Folie eingeschlagen und 8 h bei Raumtemperatur liegengelassen. Anschliessend wird es durch Spülen mit kaltem Wasser, durch Behandeln mit einem wenig Essigsäure enthaltenden wässerigen Bad und durch nochmaliges Spülen in kaltem und heissem Wasser fertiggestellt. Nach dem Trocknen erhält man eine farbstarke grünstichig gelbe Färbung von sehr guter Lichtechtheit und von sehr guten Nassechtheiten.

*Anwendungsbeispiel 3:*

100 Teile eines Gewebes aus mercerisierter Baumwolle werden 10 min lang bei 60° C in 3000 Vol.-Teilen eines wässerigen Färbebades behandelt, das 5 Teile des Natriumsalzes der erfindungsgemässen Verbindung von Beispiel 1 sowie 150 Teile wasserfreies Natriumsulfat enthält. Nach dieser 10minütigen Behandlung werden 15 Teile wasserfreies Natriumcarbonat und 4 Teile 33%ige Natronlauge zugesetzt. Die Färbung wird 60 min bei 60° C weitergeführt. Anschliessend wird das gefärbte Gewebe in üblicher Weise, wie beispielsweise im Anwendungsbeispiel 2, fertiggestellt. Man erhält eine farbstarke, grünstichig gelbe Färbung von sehr guter Lichtechtheit und von sehr guten Nassechtheiten.

*Anwendungsbeispiel 4:*

100 Teile eines Wollgewebes werden in ein 40° C warmes wässeriges Färbebad eingebracht, das aus 3000 Teilen Wasser, 2 Teilen des Natriumsalzes der im Beispiel 1 beschriebenen erfindungsgemässen Verbindung, 0,15 Teilen eines Anlagerungsproduktes von 12 mol Äthylenoxid an 1 mol Stearylamin, 2 Teilen Ammoniumacetat und 2 Teilen 60%iger wässeriger Essigsäure besteht. Die Färbetemperatur wird innerhalb von 30 min auf Kochtemperatur erhöht und die Färbung anschliessend 60 min lang bei 100° C weitergeführt. Nach dem üblichen Auswaschen und Fertigstellen der erhaltenen Wollfärbung zeigt dieses Wollgewebe einen farbstarken, grünstichig gelben Farbton von sehr guter Lichtechtheit und von sehr guten Nassechtheiten.

*Anwendungsbeispiel 5:*

Man verfährt in der im Anwendungsbeispiel 4 angegebenen Färbeweise, ersetzt jedoch das Wollgewebe durch 100 Teile eines Gewebes aus einer E-Polycaprolactamfaser. Man erhält ebenfalls eine farbstarke, grünstichig gelbe Färbung von guten Gebrauchsechtheiten.

Gemäss den obigen Anwendungsbeispielen lassen sich auch die anderen, hier in den Ausführungsbeispielen und Tabellenbeispielen beschriebenen erfindungsgemässen Monoazoverbindungen in die Färbe- und Druckverfahren einsetzen. In analoger Weise erhält man beispielsweise mit diesen in den Anwendungsbeispielen 1 bis 5 beschriebenen Färbe- und Druckmethoden mit einem anderen Farbstoff der vorliegenden Erfindung ebenfalls sehr farbstarke Färbungen und Drucke von guten Licht- und Nassechtheitseigenschaften in den Farbtönen, die für das jeweilige Ausführungs- oder Tabellenbeispiel angegeben sind.

**Patentansprüche**

1. Wasserlösliche Monoazoverbindungen der allgemeinen Formel (1)

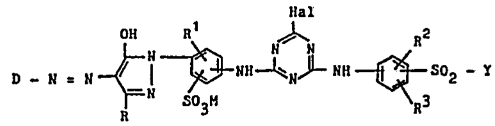 (1)

in welcher

D ein Phenylrest oder Naphthylrest ist, die beide substituiert sind und zwingend mindestens eine wasserlöslichmachende Gruppe enthalten und einer der Substituenten auch eine Gruppe der Formel $-SO_2-Z$ enthalten oder eine solche Gruppe sein kann,
in welcher Z für die β-Hydroxyäthylgruppe steht oder eine Gruppe Y der nachstehend angegebenen Bedeutung ist,

M ein Wasserstoffatom oder das Äquivalent eines ein-, zwei- oder dreiwertigen Metalls ist,

R die Methylgruppe, eine Carboxygruppe oder eine Carbalkoxygruppe von 1 bis 4 C-Atomen im Alkylrest ist,

$R^1$ ein Wasserstoffatom oder eine Alkylgruppe von 1 bis 4 C-Atomen ist,

$R^2$ ein Wasserstoffatom, eine Alkylgruppe von 1 bis 4 C-Atomen, eine Alkoxygruppe von 1 bis 4 C-Atomen oder ein Chloratom ist,

$R^3$ ein Wasserstoffatom, eine Alkylgruppe von 1 bis 4 C-Atomen oder eine Alkoxygruppe von 1 bis 4 C-Atomen ist,
wobei die Formelglieder $R^1$, $R^2$, $R^3$ und R zueinander gleiche oder voneinander verschiedene Bedeutungen besitzen können,

Y die Vinylgruppe oder eine Äthylgruppe, die in β-Stellung einen als Anion alkalisch eliminierbaren Rest enthält, ist,

Hal ein Chlor- oder Fluoratom, ist.

2. Monoazoverbindungen nach Anspruch 1 der allgemeinen Formel (1), dadurch gekennzeichnet, dass D hier ein Phenylrest oder ein Naphthylrest ist, die beide durch 1, 2 oder 3 Substituenten substituiert sind, wobei diese Substituenten aus der Menge von einer Sulfamoyl-, einer Carbamoyl-, einer Trifluormethyl-, einer Benzthiazol-2-yl-, einer Sulfobenzthiazol-2-yl-, einer Methylbenzthiazol-2-yl-, einer Methylsulfobenzthiazol-2-yl-, einer Styryl-, einer Nitrostyryl-, einer Sulfostyryl- und einer Nitrosulfostyrylgruppe und drei Sulfogruppen, zwei Carboxygruppen, zwei Alkylgruppen von 1 bis 4 C-Atomen, zwei Alkoxygruppen von 1 bis 4 C-Atomen, einem Bromatom und zwei Chloratomen und einer oder zwei Gruppen der Formel $-SO_2-Z$ mit Z der in Anspruch 1 genannten Bedeutung ausgewählt sind, wobei die Gruppe $-SO_2-Z$ auch an einen der Stubstituenten gebunden sein kann.

3. Monoazoverbindungen nach Anspruch 1 der allgemeinen Formel (1), dadurch gekennzeichnet, dass D hier den Phenylrest oder einen Naphthylrest bedeutet, die beide durch 1, 2 oder 3 Substituenten substituiert sind, die aus der Menge von drei Sulfogruppen, zwei Carboxygruppen, zwei Alkylgruppen von 1 bis 4 C-Atomen, zwei Alkoxygruppen von 1 bis 4 C-Atomen, einem Bromatom und zwei Chloratomen und einer oder zwei Gruppen der Formel $-SO_2-Z$ mit Z der in Anspruch 1 genannten Bedeutung ausgewählt sind.

4. Monoazoverbindungen nach Anspruch 1 der allgemeinen Formel (1), dadurch gekennzeichnet, dass D hier den Phenylrest bedeutet, der durch 1, 2 oder 3 Substituenten aus der Menge von zwei Sulfogruppen, einer Carboxygruppe, zwei Chloratomen, einem Bromatom, zwei Alkylgruppen von 1 bis 4 C-Atomen und zwei Alkoxygruppen von 1 bis 4 C-Atomen substituiert ist.

5. Verbindungen nach Anspruch 1, dadurch gekennzeichnet, dass D für den Monosulfo- oder Disulfophenylrest oder für den Monosulfo-, Disulfo- oder Trisulfonaphthylrest steht.

6. Verbindungen nach einem der Ansprüche 1 bis 5, dadurch gekennzeichnet, dass eine Sulfogruppe im Formelrest D in Orthostellung zur Azogruppe gebunden ist.

7. Monoazoverbindungen nach Anspruch 4, dadurch gekennzeichnet, dass einer der Substituenten von D hier durch eine Gruppe der allgemeinen Formel $-SO_2-Y$ mit Y der β-Sulfatoäthyl-, β-Phosphatoäthyl- oder β-Thiosulfatoäthylgruppe ausgetauscht ist.

8. Verbindungen nach Anspruch 1 der allgemeinen Formel (1a)

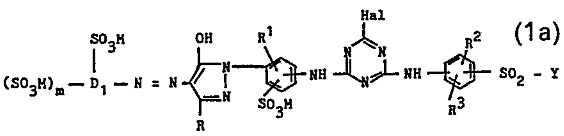

(1a)

in welcher M, Y, $R^1$, $R^2$, $R^3$ und Hal die in Anspruch 1 genannten Bedeutungen besitzen, $D_1$ den Benzol- oder Naphthalinkern bedeutet, in dem die eine Sulfogruppe in Orthostellung zur Azogruppe gebunden ist, und m für die Zahl Null (m = 0 bedeutet H), 1 oder 2 steht.

9. Verbindungen nach Anspruch 8 entsprechend der allgemeinen Formel (1a), in welcher $D_1$ den Benzolkern bedeutet und m für die Zahl Null steht.

10. Verbindungen nach einem der Ansprüche 1, 2, 3, 4, 5, 6, 8 oder 9, dadurch gekennzeichnet, dass Y für die Vinyl- oder β-Sulfatoäthylgruppe steht.

11. Verbindungen nach einem der Ansprüche 1 bis 9, dadurch gekennzeichnet, dass Y hier für die β-Sulfatoäthylgruppe steht.

12. Verbindungen nach einem der Ansprüche 1 bis 11, dadurch gekennzeichnet, dass R hier für eine Carboxygruppe steht.

13. Verbindungen nach einem der Ansprüche 1 bis 12, dadurch gekennzeichnet, dass M hier für Wasserstoff, Natrium oder Kalium steht.

14. Verfahren zur Herstellung der in Anspruch 1 genannten und definierten Verbindungen der allgemeinen Formel (1), dadurch gekennzeichnet, dass man eine Diazoniumverbindung eines Amins der allgemeinen Formel (3)

$$D-NH_2 \quad (3)$$

in welcher D die in Anspruch 1 genannte Bedeutung hat, mit einer Pyrazolonverbindung der allgemeinen Formel (4)

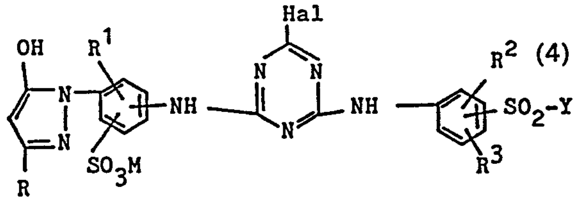

(4)

in welcher Hal, R, $R^1$, $R^2$, $R^3$, M und Y die in Anspruch 1 genannten Bedeutungen haben, kuppelt, oder dass man eine Aminoazoverbindung der allgemeinen Formel (5)

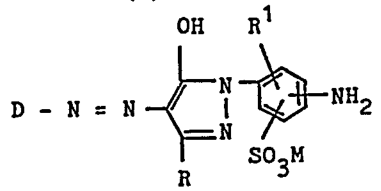

(5)

in welcher D, R, $R^1$ und M die in Anspruch 1 genannten Bedeutungen haben, mit einer Dihalogentriazinverbindung der allgemeinen Formel (6)

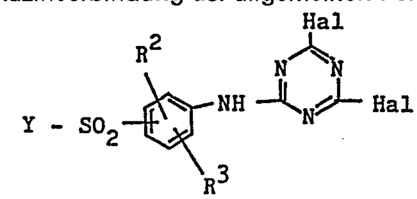

(6)

in welcher Hal, $R^2$, $R^3$ und Y die in Anspruch 1 genannten Bedeutungen haben, umsetzt,
oder dass man eine Dihalogentriazinazoverbindung der allgemeinen Formel (7)

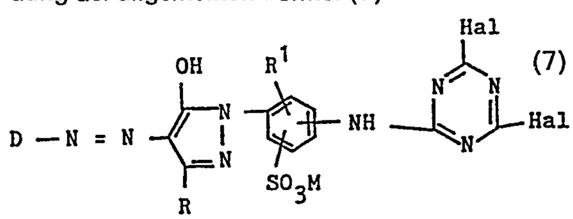

(7)

in welcher Hal, D, R, $R^1$ und M die in Anspruch 1 genannten Bedeutungen haben, mit einer Aminoverbindung der allgemeinen Formel (8)

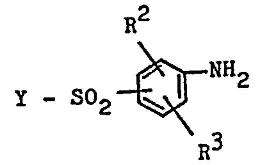

(8)

in welcher $R^2$, $R^3$ und Y die in Anspruch 1 genannten Bedeutungen haben, umsetzt,
wobei man die Reaktionskomponenten jeweils so auswählt, dass die entstehende Azoverbindung entsprechend der allgemeinen Formel (1) mindestens eine Gruppe der Formel $-SO_2-Y$ enthält.

15. Abänderung des Verfahrens nach Anspruch 14 zur Herstellung von in Anspruch 1 genannten und definierten Verbindungen der allgemeinen Formel (1), in welchen jedoch Y für einen Äthylrest steht, der in β-Stellung durch eine Estergruppe, vorzugsweise Sulfatogruppe, substituiert ist, dadurch gekennzeichnet, dass in den in Anspruch 14 genannten Ausgangsverbindungen einer der Formelreste Y oder beide jeweils für die β-Hydroxyäthylgruppe stehen und dass man die erhaltene Azoverbindung entsprechend der allgemeinen Formel (1), in welcher jedoch Y den β-Hydroxyäthylrest bedeutet, mit einem Veresterungs- oder Acylierungsmittel, vorzugsweise Sulfatierungsmittel, umsetzt.

16. Verwendung der Verbindungen von Anspruch 1 zum Färben von hydroxy- und/oder carbonamidgruppenhaltigen Materialien, insbesondere Fasermaterialien.

## Claims

1. Water-soluble monoazo compounds of the general Formula (1)

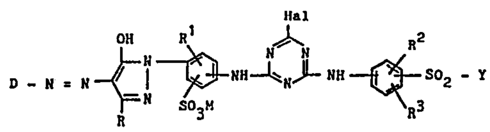 (1)

in which

D is a phenyl or naphthyl radical, either of which is substituted and mandatorily contains at least one group which imparts solubility in water, one of the substituents can also contain, or be, a group of the formula $-SO_2-Z$, in which Z represents the β-hydroxyethyl group or a group Y of the meaning indicated below,

M is a hydrogen atom or the equivalent of a monovalent, divalent or trivalent metal,

R is the methyl group, a carboxy group or a carbalkoxy group of 1 to 4 C atoms in the alkyl radical,

$R^1$ is a hydrogen atom or an alkyl group of 1 to 4 C atoms,

$R^2$ is a hydrogen atom, an alkyl group of 1 to 4 C atoms, an alkoxy group of 1 to 4 C atoms or a chlorine atom,

$R^3$ is a hydrogen atom, an alkyl group of 1 to 4 C atoms or an alkoxy group of 1 to 4 C atoms,

the formula moieties $R^1$, $R^2$, $R^3$ and R can be identical to or different from one another,

Y is the vinyl group, or an ethyl group which contains, in the β-position, a radical which can be eliminated as an anion under alkaline conditions,

Hal is a chlorine or fluorine atom.

2. Monoazo compounds according to Claim 1, of the general Formula (1), characterized in that D is a phenyl radical or a naphthyl radical, either of which is substituted by 1, 2 or 3 substituents which are selected from the set consisting of one sulfamoyl, one carbamoyl, one trifluoromethyl, one benzothiazol-2-yl, one sulfobenzothiazol-2-yl, one methylbenzothiazol-2-yl, one methylsulfobenzothiazol-2-yl, one styryl, one nitrostyryl, one sulfostyryl and one nitrosulfostyryl group and three sulfo groups, two carboxy groups, two alkyl groups of 1 to 4 C atoms, two alkoxy groups of 1 to 4 C atoms, one bromine atom and two chlorine atoms and one or two groups of the formula $-SO_2-Z$ with Z of the meaning mentioned in Claim 1, and the group $-SO_2-Z$ can also be bonded to one of the substituents.

3. Monoazo compounds according to Claim 1, of the general Formula (1), characterized in that D denotes the phenyl radical or a naphthyl radical, either of which is substituted by 1, 2 or 3 substituents which are selected from the set consisting of three sulfo groups, two carboxy groups, two alkyl groups of 1 to 4 C atoms, two alkoxy groups of 1 to 4 C atoms, one bromine atom and two chlorine atoms and one or two groups of the formula $-SO_2-Z$ with Z of the meaning mentioned in Claim 1.

4. Monoazo compounds according to Claim 1, of the general Formula (1), characterized in that D denotes the phenyl radical which is substituted by 1, 2 or 3 substituents selected from the set consisting of two sulfo groups, one carboxy group, two chlorine atoms, one bromine atom, two alkyl groups of 1 to 4 C atoms and two alkoxy groups of 1 to 4 C atoms.

5. Compounds according to Claim 1, characterized in that D represents a monosulfophenyl or disulfophenyl radical or a monosulfonaphthyl, disulfonaphthyl or trisulfonaphthyl radical.

6. Compounds according to one of Claims 1 to 5, characterized in that a sulfo group is bonded in the formula radical D in ortho-position relative to the azo group.

7. Monoazo compounds according to Claim 4, characterized in that one of the substituents of D is replaced by a group of the general formula $-SO_2-Y$ with Y having the meaning of the β-sulfatoethyl, β-phosphatoethyl or β-thiosulfatoethyl group.

8. Compounds according to Claim 1, of the general Formula (1a)

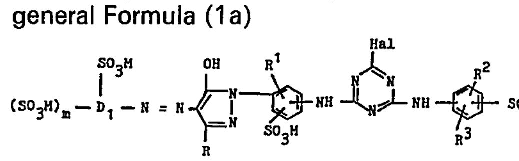 (1a)

in which M, Y, $R^1$, $R^2$, $R^3$ and Hal have the meanings mentioned in Claim 1, $D_1$ denotes the benzene or naphthalene nucleus in which the indicated sulfo group is bonded in the ortho-position relative to the azo group and m represents 0 (m = 0 implies H), 1 or 2.

9. Compounds according to Claim 8, corresponding to the general Formula (1a) in which $D_1$ denotes the benzene nucleus and m represents 0.

10. Compounds according to one of Claims 1, 2, 3, 4, 5, 6, 8 or 9, characterized in that Y represents the vinyl or β-sulfatoethyl group.

11. Compounds according to one of Claims 1 to 9, characterized in that Y represents the β-sulfatoethyl group.

12. Compounds according to one of Claims 1 to 11, characterized in that R represents a carboxy group.

13. Compounds according to one of Claims 1 to 12, characterized in that M represents hydrogen, sodium or potassium.

14. A process for preparing the compounds of the general Formula (1) mentioned and defined in

Claim 1, characterized in that a diazonium compound of an amine of the general Formula (3)

$$D-NH_2 \quad (3)$$

in which D has the meaning mentioned in Claim 1, is coupled with a pyrazolone compound of the general Formula (4)

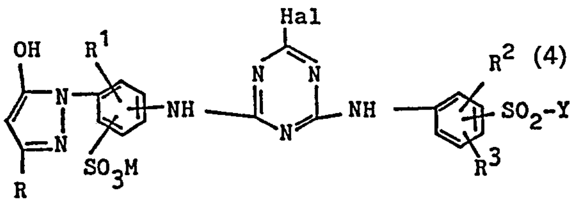

(4)

in which Hal, R, $R^1$, $R^2$, $R^3$, M and Y have the meanings mentioned in Claim 1,
or that an aminoazo compound of the general Formula (5)

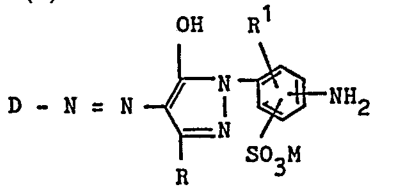

(5)

in which D, R, $R^1$ and M have the meanings mentioned in Claim 1, is reacted with a dihalogenotriazine compound of the general Formula (6)

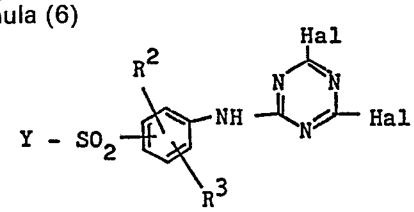

(6)

in which Hal, $R^2$, $R^3$ and Y have the meanings mentioned in Claim 1,
or that a dihalogenotriazino-azo compound of the general Formula (7)

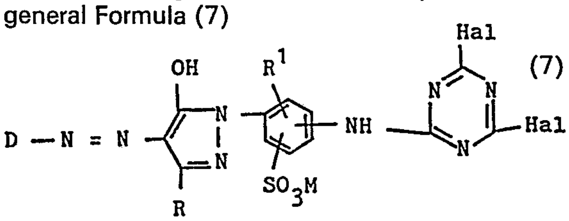

(7)

in which Hal, D, R, $R^1$ and M have the meanings mentioned in Claim 1, is reacted with an amino compound of the general Formula (8)

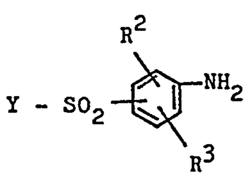

(8)

in which $R^2$, $R^3$ and Y have the meanings mentioned in Claim 1,
while selecting in each case the reaction components in such a way that the resulting azo compound corresponding to the general Formula (1) contains at least one group of the formula $-SO_2-Y$.

15. A modification of the process of Claim 14 for preparing a compound of the general Formula (1) mentioned and defined in Claim 1, but in which Y represents an ethyl radical which is substituted in the β-position by an ester group, preferably a sulfato group, characterized in that one or both of the formula radicals Y in the starting compounds mentioned in Claim 14 each represent the β-hydroxyethyl group and that the resulting azo compound corresponding to the general Formula (1), in which, however, Y denotes the β-hydroxyethyl radical, is reacted with an esterifying or acylating agent, preferably a sulfating agent.

16. The use of the compounds of Claim 1 for colouring materials, in particular fiber materials, containing hydroxy and/or carbonamide groups.

## Revendications

1. Composés monoazoïques solubles dans l'eau qui répondent à la formule générale (1)

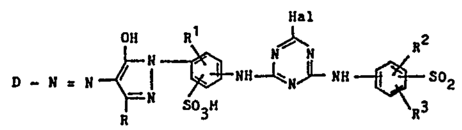

(1)

dans laquelle

D représente un radical phényle ou un radical naphtyle, chacun d'eux étant substitué et portant obligatoirement au moins un radical hydrosolubilisant, et l'un des substituants pouvant également contenir ou être un radical $-SO_2-Z$, dans lequel Z représente un radical hydroxy-2-éthyle ou un radical Y tel que défini ci-dessous,

M représente un atome d'hydrogène ou l'équivalent d'un métal monovalent, bivalent ou trivalent,

R représente un radical méthyle, un radical carboxy ou un radical alcoxycarbonyle contenant de 1 à 4 atomes de carbone dans sa partie alkyle,

$R^1$ représente un atome d'hydrogène ou un radical alkyle contenant de 1 à 4 atomes de carbone,

$R^2$ représente un atome d'hydrogène, un radical alkyle contenant de 1 à 4 atomes de carbone, un radical alcoxy contenant de 1 à 4 atomes de carbone ou un atome de chlore,

$R^3$ représente un atome d'hydrogène, un radical alkyle contenant de 1 à 4 atomes de carbone ou un radical alcoxy contenant de 1 à 4 atomes de carbone,

les symboles $R^1$, $R^2$, $R^3$ et R pouvant avoir les mêmes significations ou des significations différentes les uns par rapport aux autres,

Y représente un radical vinyle ou un radical éthyle portant, en sa position 2, un radical éliminable à l'état d'anion en milieu alcalin, et

Hal représente un atome de chlore ou de fluor.

2. Composés monoazoïques de formule générale (1) selon la revendication 1, caractérisés en ce que D représente un radical phényle ou un radical naphtyle, chacun d'eux portant 1, 2 ou 3 substituants choisis dans l'ensemble constitué par un sulfamoyle, un carbamoyle, un trifluorométhyle,

un benzothiazolyle-2, un sulfobenzothiazolyle-2, un méthylbenzothiazolyle-2, un méthylsulfobenzothiazolyle-2, un styryle, un nitrostyryle, un sulfostyryle et un nitrosulfostyryle et trois sulfo, deux carboxy, deux alkyles en $C_1$-$C_4$, deux alcoxy en $C_1$-$C_4$, un atome de brome et deux atomes de chlore et un ou deux radicaux répondant à la formule $-SO_2-Z$ dans laquelle Z a la signification donnée à la revendication 1, le radical $-SO_2-Z$ pouvant également être porté par l'un des substituants.

3. Composés monoazoïques de formule générale (1) selon la revendication 1, caractérisés en ce que D représente un radical phényle ou un radical naphtyle, chacun d'eux portant 1, 2 ou 3 substituants choisis dans l'ensemble constitué par trois sulfo, deux carboxy, deux alkyles en $C_1$-$C_4$, deux alcoxy en $C_1$-$C_4$, un atome de brome et deux atomes de chlore et un ou deux radicaux répondant à la formule $-SO_2-Z$ dans laquelle Z a la signification donnée à la revendication 1.

4. Composés monoazoïques de formule générale (1) selon la revendication 1, caractérisés en ce que D représente un radical phényle qui porte 1, 2 ou 3 substituants pris dans l'ensemble constitué par deux radicaux sulfo, un radical carboxy, deux atomes de chlore, un atome de brome, deux radicaux alkyles en $C_1$-$C_4$ et deux radicaux alcoxy en $C_1$-$C_4$.

5. Composés selon la revendication 1, caractérisés en ce que D représente un radical monosulfo- ou disulfophényle ou un radical monosulfo-, disulfo- ou trisulfonaphtyle.

6. Composés selon l'une des revendications 1 à 5, caractérisés en ce qu'un radical sulfo est fixé, sur le radical D, en position ortho par rapport au radical azo.

7. Composés monoazoïques selon la revendication 4, caractérisés en ce que l'un des substituants de D est échangé contre un radical de formule générale $-SO_2-Y$ dans laquelle Y représente un radical sulfato-2-éthyle, phosphato-2-éthyle ou thiosulfato-2-éthyle.

8. Composés selon la revendication 1 qui répondent à la formule générale (1a)

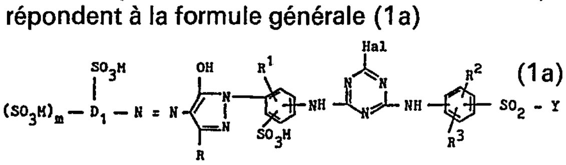

(1a)

dans laquelle M, Y, $R^1$, $R^2$, $R^3$ et Hal ont les significations données à la revendication 1, $D_1$ représente un noyau benzénique ou naphtalénique sur lequel le sulfo ou l'un des sulfo est fixé en position ortho par rapport au radical azo, et m représente 0 (m = 0 signifie qu'il y a H à l'endroit considéré), 1 ou 2.

9. Composés de formule générale (1a) selon la revendication 8, dans lesquels $D_1$ représente un noyau benzénique et m est égal à 0.

10. Composés selon l'une des revendications 1, 2, 3, 4, 5, 6, 8 ou 9, caractérisés en ce que Y représente un radical vinyle ou un radical sulfato-2-éthyle.

11. Composés selon l'une des revendications 1 à 9, caractérisés en ce que Y représente un radical sulfato-2-éthyle.

12. Composés selon l'une des revendications 1 à 11, caractérisés en ce que R représente un radical carboxy.

13. Composés selon l'une des revendications 1 à 12, caractérisés en ce que M représente l'hydrogène, le sodium ou le potassium.

14. Procédé de préparation des composés de formule générale (1) selon la revendication 1, caractérisé en ce qu'on copule un composé de diazonium d'une amine répondant à la formule générale (3)

$$D-NH_2 \qquad (3)$$

dans laquelle D a la signification donnée à la revendication 1, avec une pyrazolone répondant à la formule générale (4)

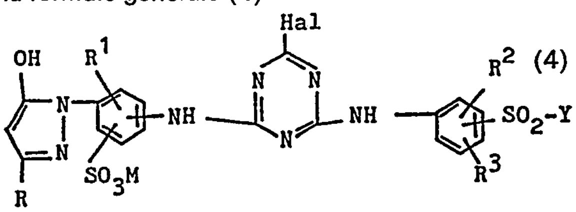

(4)

dans laquelle Hal, R, $R^1$, $R^2$, $R^3$, M et Y ont les significations données à la revendication 1,
ou on fait réagir un composé aminoazoïque répondant à la formule générale (5)

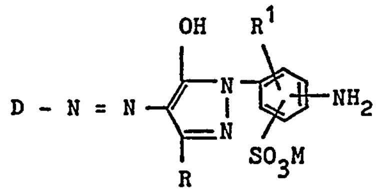

(5)

dans laquelle D, R, $R^1$ et M ont les significations données à la revendication 1, avec un composé dihalogénotriazinique répondant à la formule générale (6)

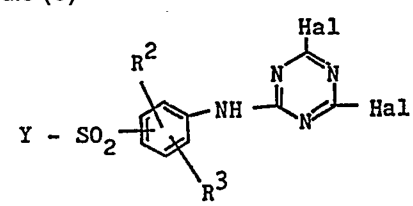

(6)

dans laquelle Hal, $R^2$, $R^3$ et Y ont les significations données à la revendication 1,
ou on fait réagir un composé azodihalogénotriazinique répondant à la formule générale (7)

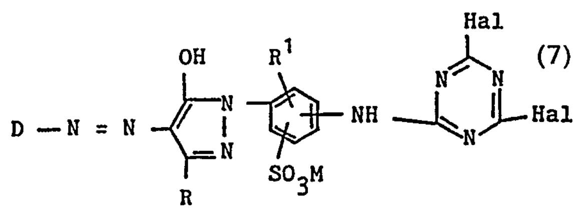

(7)

dans laquelle Hal, D, R, $R^1$ et M ont les significations données à la revendication 1, avec un composé aminé répondant à la formule générale (8)

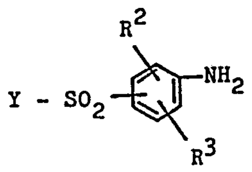

(8)

dans laquelle $R^2$, $R^3$ et Y ont les significations données à la revendication 1,
les composantes réactionnelles étant choisies de telle façon que le composé azoïque de formule générale (1) qui se forme contienne au moins un radical $-SO_2-Y$.

15. Variante du procédé selon la revendication 14 pour la préparation de composés de formule générale (1) selon la revendication 1, mais dans lesquels Y représente un radical éthyle portant, en sa position 2, un radical d'ester, de préférence un radical sulfato, variante caractérisée en ce que, dans les corps de départ mentionnés à la revendication 14, l'un des radicaux Y ou les deux représentent un radical hydroxy-2-éthyle et en ce qu'on fait réagir le composé azoïque obtenu, qui répond à la formule générale (1), mais dans laquelle Y représente un radical hydroxy-2-éthyle, avec un agent d'estérification ou d'acylation, de préférence avec un agent de sulfatation.

16. Application des composés selon la revendication 1 pour la teinture de matières, plus particulièrement de matières fibreuses, contenant des radicaux hydroxy et/ou des radicaux carbamoyles.